# EUROPÄISCHE PATENTSCHRIFT

(11) **EP 0 943 534 B1**
(45) Veröffentlichungstag und Bekanntmachung des Hinweises auf die Patenterteilung: **28.04.2004**
(21) Anmeldenummer: 99101522.3
(22) Anmeldetag: 28.01.1999
(51) Int. Cl.: B62D 65/00, B60C 23/04

(54) **Montagevorrichtung, in einer Fahrzeugzusammenbaustrasse, für Elektronikgeräte für ein Kraftfahrzeug**
Mounting device on an assembly line for electronic components in a motor vehicle
Dispositif de montage , sur une chaîne de montage , pour appareils électroniques d'un véhicule

(30) Priorität: 17.03.1998 DE 19811617
(43) Veröffentlichungstag der Anmeldung: 22.09.1999
(73) Patentinhaber: Bayerische Motoren Werke Aktiengesellschaft, 80788 München (DE)
(72) Erfinder: Klonder, Armin, 81827 München (DE); Winkler, Hans-Jürgen, 86916 Kaufering (DE)

(56) Entgegenhaltungen:
- WO-A-94/06640
- DE-A- 4 112 738
- DE-A- 19 532 914
- DE-U- 29 616 803
- DE-U- 29 714 999

## Beschreibung

Die Erfindung bezieht sich auf eine Montagevorrichtung für ein Kraftfahrzeug nach dem Oberbegriff des Patentanspruchs 1. Aus der DE 29 616 803 U1 ist eine Montagevorrichtung der gattungsgemässen Art bekannt.

Bei Montagevorrichtungen, insbesondere am Band im Rahmen der Kraftfahrzeugproduktion, werden die verbauten elektronischen Komponenten eines Kraftfahrzeugs, z. B. elektronische Steuergeräte, Sensoren oder Aktuatoren sowie elektrisch gesteuerte Regelvorrichtungen, zum Test oder zur Voreinstellung (Initialisierung) erstmalig in Betrieb genommen.

Elektronische Komponenten sind beispielsweise auch Elektronikgeräte, die durch drahtlos übertragene Nutzsignale miteinander kommunizieren. Bei erstmaliger Inbetriebnahme derartiger Elektronikgeräte werden beispielsweise spezifische Kenndaten zur Initialisierung untereinander übertragen. Derartige Kenndaten können auch durch eine Programmier- oder Diagnoseeinrichtung innerhalb der Montagevorrichtung, aber außerhalb des Fahrzeuges zu den elektronischen Komponenten innerhalb des Fahrzeuges drahtlos übertragen werden. Wichtig hierbei ist, daß die empfangenden Elektronikgeräte nicht falsche Daten, insbesondere von sendenden Elektronikgeräten eines anderen in der Nähe befindlichen Kraftfahrzeuges oder von Programmiergeräten anderer in der Nähe befindlichen Motagevorrichtungen erhalten.

Im folgenden wird ein Beispiel anhand des Initialisierungsvorgangs bzw. Lernvorgangs bei einem Reifendruckkontrollsystem beschrieben:

Ein Reifendruckkontrollsystem besteht beispielsweise aus vier Radelektronikkomponenten, die vorzugsweise im Tiefbett der Felge montiert sind. Weiterhin weist das System vier, z. B. an jedem Radkasten angebrachte Antennen und ein elektronisches Steuergerät auf. Während des Betriebs messen die Radelektronikkomponenten laufend den Reifendruck und die Reifentemperatur und übermitteln diese Daten per Funk über die Antennen an das elektronische Steuergerät Bei einem Druckverlust des Reifens erhält der Fahrer eine Warnung.

Damit das elektronische Steuergerät nur die am eigenen Fahrzeug verbauten Räder überwacht und nicht die Räder von einem in der Nähe befindlichen Fremdfahrzeug, besitzt jede Radelektronikkomponente eine spezifische Kennung (ID), die von den Radelektronikkomponenten bei jeder Sendung von Daten mitübermittelt wird. Das elektronische Steuergerät empfängt bei der erstmaligen Inbetriebnahme des Systems diese spezifischen Kenndaten und speichert sie im Rahmen eines Lemvorganges ab. Jedes von der Radelektronikkomponente übermittelte Datentelegramm weist zusätzlich die spezifische Kennung auf. Für die fehlerfreie Durchführung dieses speziellen Lemvorgangs dürfen jedoch keine Telegramme von Fremdfahrzeugen zum Steuergerät des gerade lernenden Fahrzeuges gelangen. Ein derartiger Lemvorgang zur Eigenraderkennung wird derzeit am Band bei Montagevorrichtungen in Form von Rollenprüfständen durchgeführt.

Zur fehlerfreien Eigenraderkennung während des Lemvorganges müßten die Rollenprüfstände gegen Hochfrequenzeinstrahlungen abgeschirmt werden. Mittels bekannter Maßnahmen müßte hierzu ein Rollenprüfstand von einem hochfrequenzdichten Käfig umgeben sein. Hochfrequenzdichte Räume sind Spezialräume, die keine bzw. nur sehr kleine metallische Lücken aufweisen dürfen. Einen Rollenprüfstand in den Werken oder auch Montagevorrichtungen in den Werkstätten im Hinblick auf einen derartigen hochfrequenzdichten Käfig umzurüsten, wäre mit einem sehr großen Aufwand und mit hohen Kosten verbunden. Speziell die Sichtfenster, die Ein- und Ausfahrtore, die Verbindungstüren zwischen den Rollenprüfständen sowie die Antriebseinrichtungen für die Rollenprüfstände stellen hierbei die größten Probleme dar. Selbst wenn die Hochfrequenz-Abdichtung umgesetzt werden würde, so müßte sorgfältig auf deren Funktionsfähigkeit geachtet werden. Beschädigungen, wie sie im täglichen Ablauf durch Verschleiß aber auch beispielsweise durch Anfahren von Türen vorkommen können, setzen die Abschirmung außer Kraft.

Analoge Probleme ergeben sich auch bei anderen Systemen, deren Elektronikgeräte drahtlos, insbesondere per Funk, miteinander kommunizieren.

Es ist daher Aufgabe der Erfindung, eine Montagevorrichtung eingangs genannter Art derart zu verbessern, daß mit kostengünstigen Mitteln der Empfang von falschen Signalen, insbesondere von anderen Fahrzeugen oder von anderen in der Nähe befindlichen Sendestationen außerhalb der Montagevorrichtung, bei drahtloser Signalübertragung mit Sicherheit ausgeschlossen werden kann.

Diese Aufgabe wird durch die kennzeichnenden Merkmale des Patentanspruchs 1 gelöst.

Der Gegenstand des Patentanspruchs 2 stellt eine bevorzugte Verwendung der erfindungsgemäßen Montagevorrichtung dar.

Der Begriff Montagevorrichtung soll hier im weitesten Sinne verstanden werden und soll beispielsweise Vormontagevorrichtungen ebenso wie Prüfstände oder Werkstätten umfassen. Unter einer Montagevorrichtung wird auch eine elektrische Montagevorrichtung, ein Prüfplatz oder ein Arbeitsplatz zur elektronischen Programmierung verstanden.

Bei der erfindungsgemäßen Montagevorrichtung für ein Kraftfahrzeug, das mit Elektronikgeräten ausgestattet ist, die durch drahtlos übertragene Nutzsignale miteinander kommunizieren oder die durch drahtlos übertragene Nutzsignale mit innerhalb der Montagevorrichtung, aber außerhalb des Fahrzeuges befindlichen Elektronikgeräten (z. B. Programmierstationen, Diagnosegeräte) kommunizieren, ist ein Störsignalgenerator vorgesehen, der ein Störsignal in der Weise erzeugt, daß von den in der Montagevorrichtung befindlichen empfangenden Elektronikgeräten nur die Nutzsignale der in der Montagevorrichtung befindlichen sendenden Elektronikgeräte empfangen werden können. Beispielsweise können durch das Störsignal bei dem in der erfindungsgemäßen Montagevorrichtung befindlichen Kraftfahrzeug von den im Kraftfahrzeug verbauten empfangenden Elektronikgeräten nur die Nutzsignale der im selben Kraftfahrzeug verbauten sendenden Elektronikgeräte empfangen werden. Oder von den im Kraftfahrzeug verbauten empfangenden Elektronikgeräten können nur die Nutzsignale der innerhalb der erfindungsgemäßen Montagevorrichtung, aber außerhalb des Fahrzeuges befindlichen sendenden Elektronikgeräte, wie z. B. externe Programmiergeräte, empfangen werden.

Der Erfindung liegt der Gedanke zugrunde, daß gemäß physikalischer Gesetzmäßigkeiten ein von einem Sender abgesandtes Signal umso schwächer empfangen wird, je weiter der Empfänger vom Sender entfernt ist. Bei der drahtlosen Übertragung von Nutzsignalen, insbesondere per Funk, zu Elektronikgeräten in Kraftfahrzeugen wird demnach ein Datentelegramm von einem am Fahrzeug verbauten Elektronikgerät oder von einer außerhalb des Fahrzeuges, aber innerhalb der Montagevorrichtung befindlichen drahtlos kommunizierenden Sendestation (Programmiergerät oder Diagnosevorrichtung) stärker empfangen als das Telegramm, das beispielsweise von einem Elektronikgerät eines in der Nähe befindlichen Fremdfahrzeuges außerhalb der Montagevorrichtung ausgesendet wird.

Daher wird mittels eines Signalgenerators erfindungsgemäß ein Störsignal, z. B. ein bandbegrenztes Rauschen im Bereich um die Trägerfrequenz der Datentelegramme, um das in der Montagevorrichtung befindliche Kraftfahrzeug erzeugt. Beispielsweise wird der Pegel eines derartigen Störsignals experimentell auf einen Wert eingestellt, daß die im Fahrzeug befindlichen Elektronikgeräte die Nutzsignale gerade noch detektieren können. Dagegen besitzen die Datentelegramme von sendenden Elektronikgeräten außerhalb der (eigenen) Montagevorrichtung (in Fremdfahrzeugen oder in benachbarten Montagevorrichtungen) aufgrund der räumlichen Entfernung einen geringeren Empfangspegel, wodurch die Detektion von Nutzsignalen z. B. anderer Fahrzeuge nicht mehr möglich ist.

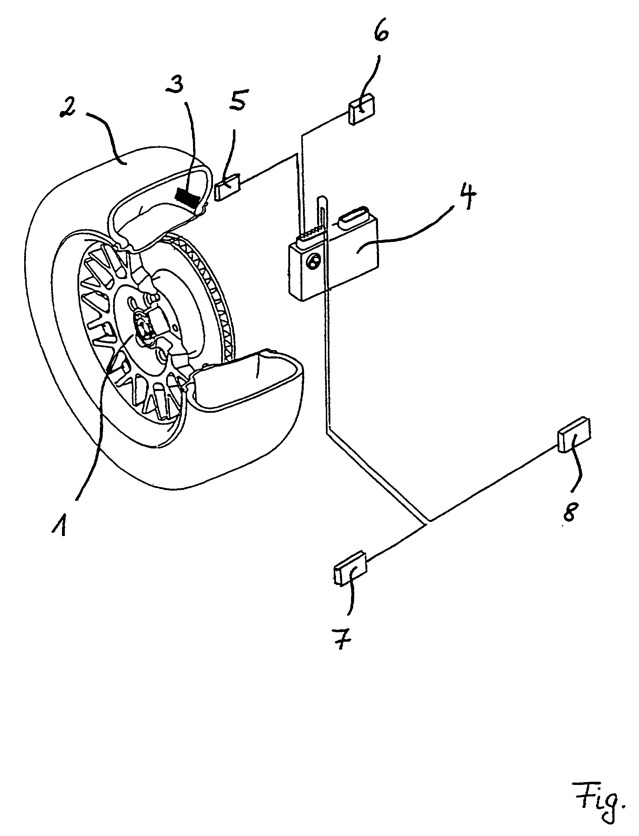

In der Zeichnung ist ein Ausführungsbeispiel anhand eines Reifendruckkontrollsystems dargestellt.

In der einzigen Figur ist in aufgeschnittener Darstellung ein Kraftfahrzeugrad 1 mit einem Reifen 2 gezeigt. Am Reifen 2 ist ein Elektronikgerät in Form einer Radelektronikkomponente 3 vorgesehen, die beispielsweise durch Einvulkanisieren im Reifen 2 integriert oder im Tiefbett der Felge montiert ist. Die Radelektronikkomponente 3 kommuniziert über eine Antenne 5 durch drahtlos übertragene Nutzsignale mit dem elektronischen Steuergerät 4. Bei einem Kraftfahrzeug mit vier Rädern weist jedes Rad eine Radelektronikkomponente auf, die jeweils über Antennen (6, 7 und 8) ebenfalls mit dem Steuergerät 4 kommunizieren. In der Figur ist zur Vereinfachung lediglich ein Rad als Beispiel dargestellt.

Die Radelektronikkomponente 3 mißt während des üblichen Kraftfahrzeugbetriebes laufend den Reifendruck und die Reifentemperatur und übermittelt diese Daten beispielsweise in Form eines Telegramms vorzugsweise per Funk über die Antennen 5 an das Steuergerät 4. Jede Radelektronikkomponente besitzt eine spezifische Kennung (ID), die ebenfalls in jedem Datentelegramm enthalten ist. Diese spezifische Kennung speichert das Steuergerät 4 im Rahmen eines Lemvorganges, insbesondere bei der erstmaligen Inbetriebnahme in einer Montagevorrichtung am Band, ab und wertet im folgenden nur noch Telegramme mit der dem Steuergerät bekannten ID-Daten aus. Jede Radelektronikkomponente, die den einzelnen Rädern eines Kraftfahrzeuges zugeordnet ist, kann dabei eine von den anderen Radelektronikkomponenten unterschiedliche Kennung aufweisen. Für die fehlerfreie Durchführung dieses Lernvorganges dürfen jedoch keine Telegramme von Fremdfahrzeugen zum Steuergerät 4 des gerade lernenden Fahrzeuges gelangen; denn das Steuergerät 4 soll nur die am eigenen Fahrzeug verbauten Räder überwachen.

Erfindungsgemäß ist hierbei an der Montagevorrichtung ein Störsignalgenerator angebracht (hier nicht dargestellt), der ein Störsignal in der Weise erzeugt, daß von dem im Kraftfahrzeug verbauten empfangenden Steuergerät 4 nur die Nutzsignale in Form von Telegrammen der im selben Kraftfahrzeug verbauten sendenden Radelektronikkomponenten empfangen werden können. Das Störsignal wird beispielsweise im Form eines bandbegrenzten Rauschens im Bereich um die Trägerfrequenzen (315 MHz bzw. 433 MHz je nach Ländervariante) der von den Radelektronikkomponenten (z.B. 3) gesendeten Telegramme erzeugt. Der Pegel dieses Störsignals wird experimentell auf einen derartigen Wert eingestellt, daß die von den Radelektronikkomponenten gesendeten Nutzsignale in Form von Telegrammen vom Steuergerät 4 gerade noch detektiert werden. Telegramme von Fremdfahrzeugen besitzen jedoch aufgrund der räumlichen Entfernung einen geringeren Empfangspegel, so daß diese Telegramme von dem in der Montagevorrichtung befindlichen Kraftfahrzeug nicht mehr detektiert werden können. Somit kann trotz des Aussendens von Telegrammen aus in der Nähe befindlichen Fremdfahrzeugen und ohne der Notwendigkeit einer hochfrequenzdichten Montagevorrichtung eine Eigenraderkennung erfolgreich durchgeführt werden.

Ergänzend wird darauf hingewiesen, daß die erfindungsgemäße Montagevorrichtung auch für andere Systeme, z. B. für die Verbaukontrolle von Komponenten oder die Code-Übermittlung bei Wegfahrsperren eingesetzt werden kann.

## Patentansprüche

1. Montagevorrichtung für ein Kraftfahrzeug, das mit Elektronikgeräten ausgestattet ist, die durch drahtlos übertragene Nutzsignale miteinander kommunizieren oder die durch drahtlos übertragene Nutzsignale mit innerhalb der Montagevorrichtung, aber außerhalb des Fahrzeuges befindlichen Elektronikgeräten (z. B. Programmierstationen, Diagnosegeräte) kommunizieren, **dadurch gekennzeichnet, daß** ein Störsignalgenerator vorgesehen ist, der ein Störsignal in der Weise erzeugt, daß von den in der Montagevorrichtung befindlichen empfangenden Elektronikgeräten nur die Nutzsignale der in der Montagevorrichtung befindlichen sendenden Elektronikgeräte empfangen werden können.

2. Verwendung der Montagevorrichtung nach Patentanspruch 1 für ein Reifendruckkontrollsystem, das sendende Elektronikgeräte in Form von jedem Rad (1) zugeordneten Radelektronikkomponenten (3) und ein empfangendes Elektronikgerät in Form eines elektronischen Steuergeräts (4) aufweist und bei dem die drahtlos übertragenen Nutzsignale per Funk von den Radelektronikkomponenten (3) zum elektronischen Steuergerät (4) übermittelt werden.

## Claims

1. A mounting device for a motor vehicle equipped with electronic units which communicate via wireless-transmitted wanted signals with one another or with electronic units (for example programming stations or diagnostic units) situated inside the mounting device but outside the vehicle, **characterised in that** an interference signal generator is provided and generates an interference signal such that the receiving electronic units in the mounting device can receive wanted signals from only the transmitting electronic units in the mounting device.

2. Use of the mounting device according to claim 1 for a tyre-pressure monitoring system comprising transmitting electronic units in the form of components (3) associated with each wheel (1) and a receiving electronic unit in the form of a control unit (4) and wherein the wireless wanted signals are transmitted by radio from the wheel components (3) to the electronic control device (4).

## Revendications

1. Dispositif de montage pour un véhicule automobile muni d'appareils électroniques qui communiquent les uns avec les autres par des signaux utiles transmis sans fil ou qui communiquent par des signaux utiles transmis sans fil avec des appareils électroniques (par exemple des postes de programmation, des appareils de diagnostic) situés à l'intérieur du dispositif de montage mais à l'extérieur du véhicule,
**caractérisé en ce que**
l'on prévoit un générateur de signaux parasites qui produit un signal parasite de telle manière que seuls les signaux utiles des appareils électroniques émetteurs placés dans le dispositif de montage peuvent être reçus par les appareils électroniques récepteurs situés dans le dispositif de montage.

2. Utilisation du dispositif de montage selon la revendication 1 pour un système de contrôle de la pression des pneus qui présente des appareils électroniques émetteurs sous forme de composants électroniques pour roues (3) associés à chaque roue (1) et un appareil électronique récepteur sous forme d'un appareil de commande (4) électronique et pour lequel les signaux utiles transmis sans fil sont communiqués par radio depuis les composants électroniques pour roues (3) jusqu'à l'appareil de commande (4) électronique.
